# EUROPÄISCHE PATENTSCHRIFT

(11) **EP 1 706 661 B1**
(45) Veröffentlichungstag und Bekanntmachung des Hinweises auf die Patenterteilung: **21.11.2007**
(21) Anmeldenummer: 04804778.1
(22) Anmeldetag: 13.12.2004
(51) Int. Cl.: F16K 31/06, B60T 15/02

(54) **ELEKTROMAGNETISCHES VENTIL, INSBESONDERE FÜR EINE BREMSANLAGE EINES KRAFTFAHRZEUGS**
ELECTROMAGNETIC VALVE, PARTICULARLY FOR A BRAKING SYSTEM OF A MOTOR VEHICLE
SOUPAPE ELECTROMAGNETIQUE, DESTINEE NOTAMMENT A UN SYSTEME DE FREINAGE D'UN VEHICULE AUTOMOBILE

(30) Priorität: 10.01.2004 DE 102004001565
(43) Veröffentlichungstag der Anmeldung: 04.10.2006
(73) Patentinhaber: ROBERT BOSCH GMBH, 70442 Stuttgart (DE)
(72) Erfinder: KRATZER, Dietmar, 71732 Tamm (DE)
(86) Internationale Anmeldenummer: PCT/EP2004/053413
(87) Internationale Veröffentlichungsnummer: WO 2005/066531

(56) Entgegenhaltungen:
- EP-A- 1 101 680
- DE-A1- 19 700 495
- DE-U1- 8 813 280

## Beschreibung

Die Erfindung betrifft ein elektromagnetisches Ventil, insbesondere für eine Bremsanlage eines Kraftfahrzeugs, mit einem länglichen Stößel, der in einer Stößelführung axial verschiebbar geführt ist, und mit einem an dem Stößel ausgebildeten Dichtkörper, der gegen einen Dichtsitz abdichten kann.

Bei bekannten Bremsanlagen werden elektromagnetische Ventile beispielsweise als Einlass- oder Umschaltventil verwendet, um an Bremsen eines zugehörigen Kraftfahrzeugs Antiblockier-, Traktions-Kontroll- oder Fahrdynamiksteuerungs-Funktionen bereitzustellen. Bekannte elektromagnetische Ventile weisen einen länglichen Stößel auf, der in einer im Wesentlichen hohlzylindrischen Stößelführung axial verschiebbar geführt ist. In der hohlzylindrischen Stößelführung ist ein ebenfalls hohlzylindrischer Dichtsitz eingepresst, an dem dann ein an einem Ende des Stößels angeordneter Dichtkörper anschlagen und damit abdichten kann. Durch das Einspressen des Dichtsitzes in die Stößelführung kann die Geometrie der gesamten Anordnung zum Anpassen und Einstellen der gewünschten Ventilfunktion verändert werden. Dabei kann insbesondere ein in axialer Richtung zwischen dem Stößel und der Stößelführung bestehender Luftspalt bei geöffnetem Dichtsitz eingestellt werden.

Bei einem solchen geöffneten Dichtsitz strömt ein Betriebsmedium, beispielsweise eine Bremsflüssigkeit bzw. ein Bremsfluid, durch den Dichtsitz in das Innere der Stößelführung und wird dann, nach einer Umlenkung in einem Winkel von 180° weiter durch in der Regel drei in der Stößelführung ausgebildete Längsnuten und sechs weitere Radialnuten, nach einer weiteren Umlenkung um einen Winkel von 180° in Richtung auf einen Radialfilter und, nach einem Durchströmen des Radialfilters und einer letzten Umlenkung um einen Winkel von 90° in das zugehörige Hydraulikaggregat des elektromagnetischen Ventils gefördert.

Aus der DE 88 13 280 ist bereits ein elektromagnetisch betätigbares Steuerventil bekannt. In einem Ventilgehäuse ist eine mittige Längsbohrung ausgebildet, in welcher ein Steuerkolben gleitend geführt ist. Weiterhin umfasst das Ventilgehäuse einen quer verlaufenden Durchgang, welcher am Ventilsitz vorbeiführt.

Aus der DE 197 00 495 A1 ist bereits eine Magnetventilanordnung bekannt, welche sich leicht montieren lässt und so abgedichtet ist, um jegliche Leckage eines Druckmittels zu verhindern. Der Ventilblock, die Buchse und der Anker sind in einer integrierten Einheit vormontiert und zwar in der Weise, dass die Mittelachsen von jeder Komponente koaxial verlaufen.

Aus der EP 1 101 680 A1 ist ein Magnetventil mit einem Rückschlagventil bekannt. Dieses Magnetventil weist ein zwischen einem Druckmitteleinlass und einem Druckmittelauslass angeordnetes Sitzventil und im Bypass zu diesem ein Rückschlagventil mit einem Schließkörper und als ebenen Ventilsitz eine Kreisringfläche an der Stirnwand einer den Schließkörper aufnehmenden hohlzylindrischen Ausnehmung eines Ventilbauteils auf.

### Aufgabe und Lösung der Erfindung

Der Erfindung liegt die Aufgabe zugrunde, ein elektromagnetisches Ventil, insbesondere für eine Bremsanlage eines Kraftfahrzeugs, bereitzustellen, das im Vergleich zu bekannten Ventilen kostengünstiger herzustellen ist und insbesondere auch besser regelbar ist.

Die Aufgabe ist erfindungsgemäß mit einem eingangs beschriebenen elektromagnetischen Ventil gelöst, bei dem der Dichtsitz und die Stößelführung einteilig ausgebildet sind. Die Erfindung basiert auf der Erkenntnis, dass bei bekannten Ventilen deren wichtigste Funktion, nämlich das Abdichten und Druckregeln, mit einem Dichtkörper und einem Dichtsitz erfolgen, die über vergleichsweise viele Schnittstellen miteinander verknüpft sind. Jede dieser Schnittstellen ist mit Maß-, Form- und Lagetoleranzen behaftet, was die für das Druckregeln wichtige Reproduzierbarkeit der Stellung des Stößels beeinträchtigt.

An der erfindungsgemäßen Stößelführung ist ferner eine Einstelleinrichtung vorgesehen, mittels der ein Luftspalt in axialer Richtung zwischen dem Anker und der Stößelführung eingestellt werden kann. Mit der Einstelleinrichtung können Längentoleranzen der genannten Einzelteile ausgeglichen und die Breite des bei geschlossenem Dichtsitz bestehenden Luftspalts zwischen dem Dichtkörper und dem Dichtsitz kann eingestellt werden.

Erfindungsgemäß ist die Anzahl der Schnittstellen zwischen dem Dichtkörper und dem Dichtsitz auf ein Minimum reduziert, und im Vergleich zu bekannten elektromagnetischen Ventilen sind mehrere Bauteile zu einem einzigen zusammengefasst. Dadurch ist erfindungsgemäß die Zahl der Unbekannten eingeschränkt und die Stellung des Stößels kann besser reproduziert werden. Diese Verbesserung wirkt sich in jedem einzelnen Ventil aus. Sie gewinnt darüber hinaus an Bedeutung, wenn mehrere Ventile in gegenseitiger Abstimmung gesteuert werden, wie es bei heutigen Bremsanlagen der Fall ist.

Trotz dieser Verbesserung bleibt bei dem erfindungsgemäßen elektromagnetischen Ventil die Möglichkeit des Einstellens der Abdicht- und Druckregelfunktionen erhalten. An dem erfindungsgemäßen Ventil können nämlich, wie nachfolgend noch genauer erläutert werden wird, geometrische Teileunterschiede dennoch vorteilhaft ausgeglichen werden.

Wie erwähnt ist es der Kern der Erfindung, dass der Dichtsitz bzw. ein Ventilkörper einteilig mit der Stößelführung bzw. einem Ventileinsatz ausgebildet ist. Aufgrund dieser erfindungsgemäßen Gestaltung kann die Führung des Stößels vergleichsweise eng bemessen sein, sodass der Stößel und dessen Dichtkörper reproduzierbar in bzw. an den Dichtsitz treffen.

Bei einer vorteilhaften Weiterbildung des erfindungsgemäßen elektromagnetischen Ventils ist es gezielt gewünscht und die Stößelführung sowie der Stößel sind entsprechend ausgestaltet, dass der Dichtkörper zentrisch gegen den Dichtsitz trifft. Alternativ kann dieses Auftreffen auch gezielt exzentrisch erfolgen. Beide Möglichkeiten lassen sich mit dem erfindungsgemäßen einteiligen Dichtsitz-Stößelführungs-Bauteil mit vergleichsweise geringem Aufwand erzielen. Die Lage des Dichtsitzes kann bei dem erfindungsgemäßen Ventil insbesondere in Radialrichtung innerhalb der Stößelführung besonders genau gearbeitet sein. Daher ist auch die Stellung des Stößels und dessen Dichtkörper im Verhältnis zum Dichtsitz in dieser Radialrichtung vergleichsweise präzise.

Eine derartige Einstelleinrichtung ist besonders vorteilhaft als Einstellring gestaltet, der insbesondere auf der Stößelführung angeordnet ist. Die Stößelführung übernimmt dadurch insgesamt eine Dreifach-Funktion, indem sie den Dichtsitz trägt, den Stößel führt und die Basis für die Einstelleinrichtung bildet. Auf diese Weise kann der oben genannte Luftspalt z.B. durch ein einfaches Verschieben des Einstellrings auf der Stößelführung eingestellt werden.

Besonders vorteilhaft ist der Einstellring an der Stößelführung mit Hilfe einer Radialpressung festgelegt. Die Radialpressung kann während des Einstellens der Ventilfunktion vergleichsweise präzise und einfach ausgebildet werden, wobei die dabei eingestellten Längenverhältnisse im nachfolgenden Betrieb des elektromagnetischen Ventils nicht mehr verändert werden.

Alternativ oder zusätzlich kann die Einstelleinrichtung als ein Einstellring gestaltet sein, der mittels einer Laserschweißnaht, insbesondere an der Mantelfläche einer im Wesentlichen zylindrischen Stößelführung festgelegt ist. Die Laserschweißnaht sorgt für eine dauerhafte, fluiddichte und lagegenaue Verbindung zwischen dem Einstellring und der Stößelführung.

Über die Stößelführung und/oder den Einstellring kann vorteilhaft eine Kappe gesteckt sein, die dann mittels einer weiteren Laserschweißnaht kostengünstig an dem Einstellring festgelegt werden kann. Mit dem Aufschieben der Kappe auf den Einstellring kann die maximale Auslenkung des Stößels in der Stößelführung festgelegt werden.

Bei einem derart ausgebildeten erfindungsgemäßen elektromagnetischen Ventil geht der magnetische Fluss von der Stößelführung radial auf den Einstellring und von diesem axial in einen am Stößel angeordneten Anker des Ventils über. Dabei übernimmt der Einstellring in der Regel keine Führungsfunktion für den Stößel.

Durch das erfindungsgemäß vorgesehene einteilige Dichtsitz-Stößelführungs-Bauteil ergeben sich ferner Vorteile bei der Teilemontage des Stößels mit seinem Anker, der Kappe sowie dem Einstellring. So kann während der Montage der Stößelhub durch ein einfaches Verändern der Relativlage des Einstellrings an der Stößelführung durch die Radialpressung eingestellt werden. Der Luftspalt zwischen dem Anker des Stößels und dem Einstellring kann nachfolgend durch Verändern der Relativlage der Kappe bzw. Kapsel auf dem Einstellring wiederum mit Hilfe einer Radialpressung eingestellt werden. Beide Relativlagen und die Dichtheit des gesamten Ventils werden dann durch die genannte doppelte Laserschweißnaht gesichert. Das elektromagnetische Ventil ist daher kostengünstig herzustellen und zu montieren. Darüber hinaus ergeben sich Vorteile hinsichtlich der Regelbarkeit des Ventils.

In der erfindungsgemäßen Stößelführung ist kein Dichtsitz eingepresst, sodass diese keine entsprechenden Presskräfte aufnehmen muss und optional im Bereich des Dichtsitzes vergleichsweise dünn ausgeführt sein kann. Dies spart Material, Gewicht und Kosten. Darüber hinaus kann an der erfindungsgemäßen Stößelführung im Bereich des Dichtsitzes vorteilhaft mindestens eine radiale Bohrung ausgebildet sein, durch die ein durch den Dichtsitz strömendes Fluid zur Außenseite der Stößelführung abgeführt werden kann. Bei diesem Abströmen des Fluids wird dessen Strömung nur einmal um einen Winkel von 90° umgelenkt. Der Strömungswiderstand ist entsprechend verringert. Darüber hinaus übernimmt die Stößelführung dann auch die Funktion "Leiten der Abströmung", sodass andere Bauteile des erfindungsgemäßen, elektromagnetischen Ventils, die diese Funktion bisher übernommen haben, entsprechend einfacher ausgebildet sein können. So kann beispielsweise ein bei bekannten Ventilen vorgesehener Kunststoffeinsatz an der vom Stößel abgewandten Seite des Dichtsitzes entsprechend einfach ausgestaltet sein.

### Kurzbeschreibung der Zeichnungen

Nachfolgend werden Ausfiihrungsbeispiele eines erfindungsgemäßen elektromagnetischen Ventils anhand der beigefügten schematischen Zeichnungen näher erläutert. Es zeigt:
- Fig. 1: einen Längsschnitt eines elektromagnetischen Ventils gemäß dem Stand der Technik,
- Fig. 2: einen Längsschnitt eines ersten Ausfiihrungsbeispiels eines erfindungsgemäßen elektromagnetischen Ventils,
- Fig. 3: eine Darstellung des magnetischen Flusses und der Strömung des Betriebsmediums bei dem erfindungsgemäßen elektromagnetischen Ventil gemäß Fig. 2 und
- Fig. 4: einen Längsschnitt eines zweiten Ausfiihrungsbeispiels eines erfindungsgemäßen elektromagnetischen Ventils.

### Detaillierte Beschreibung des Ausfiihrungsbeispiels

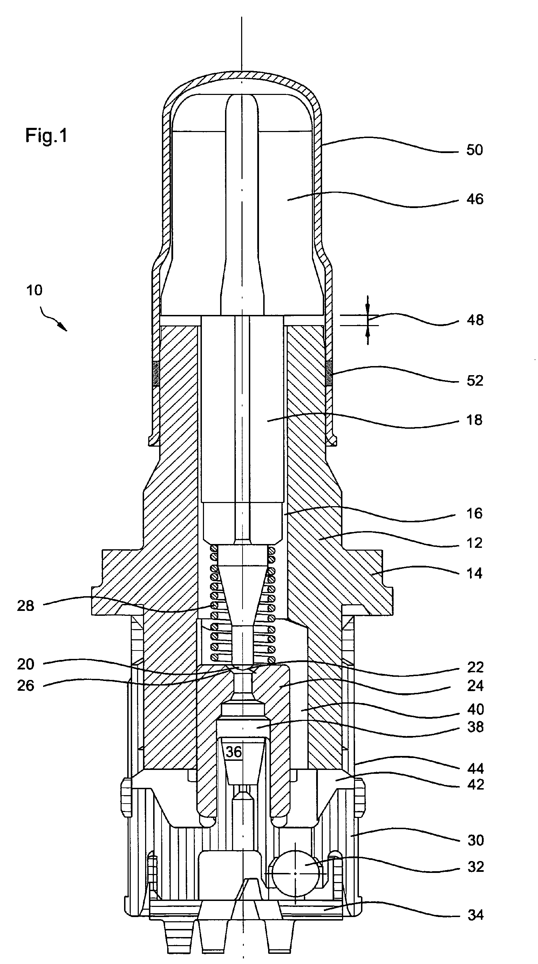

In Fig. 1 ist ein elektromagnetisches Ventil 10 gemäß dem Stand der Technik veranschaulicht. Das Ventil 10 weist als zentrales Bauteil eine im Wesentlichen hohlzylindrische Stößelführung 12 bzw. einen Ventileinsatz auf, an dessen Außenseite etwa in der Mitte der Längserstreckung ein Bund 14 und im Inneren in Längsrichtung eine Durchgangsöffnung 16 ausgebildet sind. In der Durchgangsöffnung 16 ist ein im Wesentlichen kreiszylindrischer Stößel 18 in Längsrichtung der Stößelführung 12 verschiebbar gelagert. An dem bezogen auf Fig. 1 unteren Ende des Stößels 18 ist ein Dichtkörper 20 angeordnet, der eine nach unten gewölbte Kugelsegmentoberfläche 22 aufweist.

Dem Dichtkörper 20 gegenüberliegend ist ein Dichtsitz 24 bzw. ein Dichtkörper angeordnet, der im Wesentlichen hohlzylindrisch gestaltet ist und gegenüber von der Kugelsegmentoberfläche 22 eine Kegelstumpfoberfläche 26 aufweist. Auf den unteren Teil des Stößels 18, der - wie in Fig. 1 erkennbar ist - mit kleinerem Durchmesser gestaltet ist, ist eine Spiralfeder 28 aufgeschoben, die als Druckfeder wirkt und an dem Dichtsitz 24 abgestützt ist.

An der von dieser Spiralfeder 28 abgewandten Stirnseite des im Wesentlichen hohlzylindrischen Dichtsitzes 24 ist ein nahezu scheibenförmiger Einsatzkörper 30 mit einem darin außermittig ausgebildeten Rückschlagkugelventil 32 angeordnet. An der bezogen auf Fig. 1 unteren Stirnseite dieses Einsatzkörpers 30 ist ein leicht becherförmiger Axialfilter 34 angeordnet.

In dem Einsatzkörper 30 sind eine Durchgangsbohrung 36 und in dem Dichtsitz 24 eine an diese Durchgangsbohrung 36 anschließende Durchgangsbohrung 38 in Längsrichtung ausgebildet. Durch diese Durchgangsbohrungen 36 und 38 kann ein durch den Axialfilter 34 zugeführtes flüssiges Betriebsmedium bzw. Fluid zur Kegelstumpfoberfläche 26 des Dichtsitzes 24 gelangen. Im dargestellten Betriebszustand liegt der Dichtkörper 20 nicht am Dichtsitz 24 an. Das Betriebsmedium kann daher in dem Raum in und um die Spiralfeder 28 gelangen, von wo aus es weiter durch eine oder mehrere in der Stößelführung 12 ausgebildete Längsnut(en) 40, mehrere im Einsatzkörper 30 ausgebildete Radialnuten 42 und einen an der Mantelfläche der Stößelführung 12 angeordneten Radialfilter 44 abströmen kann.

Damit diese Strömung des Betriebsmediums durch den Dichtsitz 24 hindurch vom Ventil 10 auch unterbrochen werden kann, umfasst der Stößel 18 an seinem bezogen auf Fig. 1 oberen Endabschnitt einen elektromagnetischen Anker 46. Dieser Anker kann mit Hilfe eines nicht dargestellten Elektromagneten bewegt werden, sodass der Stößel 18 in der Stößelführung 12 verschoben und die Kegelsegmentoberfläche 22 gegen die Kegelstumpfoberfläche 26 geführt wird.

Um diese Bewegung des Stößels 18 zu ermöglichen, ist zwischen der bezogen auf Fig. 1 oberen Stirnfläche der im Wesentlichen holzylindrischen Stößelführung 12 und der unteren Stirnfläche des Ankers 46 ein Luftspalt 48 ausgebildet.
Über den Anker 46 ist ferner eine im Wesentlichen becherförmige Kappe 50 gestülpt, die mit Hilfe einer Umfangsschweißnaht 52 an der äußeren Mantelfläche der Stößelführung 12 festgelegt ist.

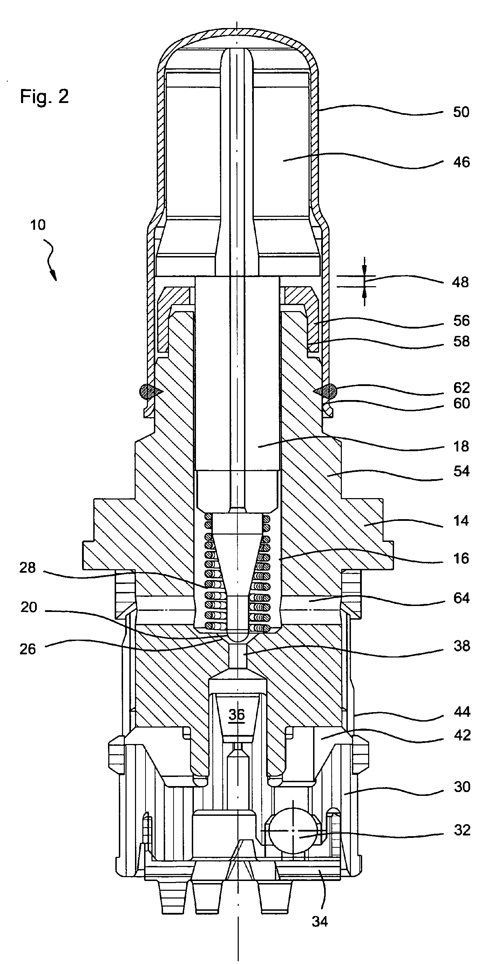

In Fig. 2 ist ein Ausführungsbeispiel eines erfindungsgemäßen elektromagnetischen Ventils 10 dargestellt. Im Gegensatz zu dem in Fig. 1 veranschaulichten Ventil 10, weist das Ventil 10 gemäß Fig. 2 ein einteiliges Dichtsitz-Stößelführungs-Bauelement 54 auf, welches sowohl die Funktion einer Stößelführung als auch die eines Dichtsitzes übernimmt.

Als weitere Neuerung gegenüber dem in Fig. 1 dargestellten Ventil 10 weist das Ventil 10 gemäß Fig. 2 an dem bezogen auf Fig. 2 oberen Endbereich einen in Querschnitt L-förmigen Einstellring 56 auf, der an der Stößelführung 12 mit Hilfe einer Radialpressung 58 festgelegt ist. Der Einstellring 56 hat keine Führungsfunktion für den Stößel 18 und dient stattdessen zum Einstellen des Luftspaltes 48, der nun bei dem Ventil 10 gemäß Fig. 2 zwischen der oberen Stirnfläche des Einstellrings 56 und der unteren Stirnfläche des Ankers 46 gebildet ist.

Über den Einstellring 56 und den bezogen auf Fig. 2 oberen Endbereich der Stößelführung 12 ist bei dem Ventil 10 gemäß Fig. 2 eine Kappe 50 gestülpt, die an der Stößelfiihrung 12 mit Hilfe einer Radialpressung 60 fest aufgeschoben und dann mit einer Laserschweißnaht 62 am äußeren Umfang der Stößelführung 12 festgelegt ist.

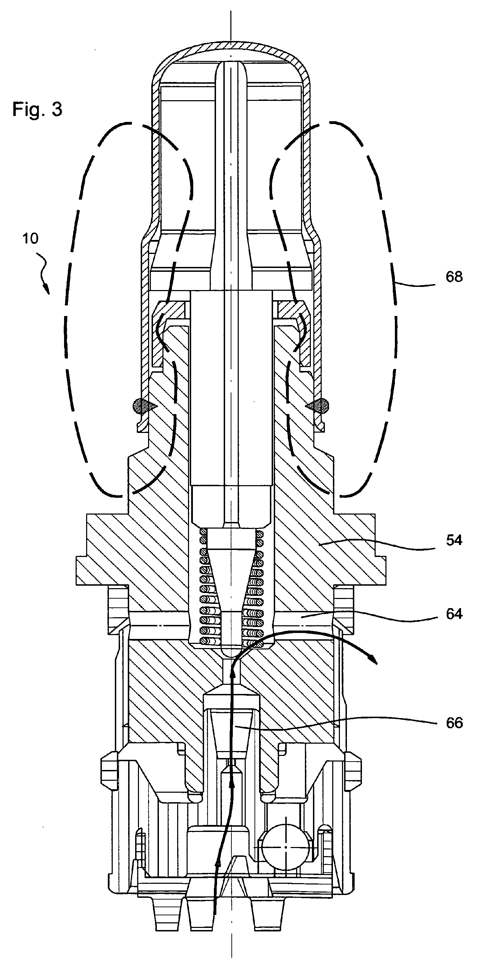

Über diese Neuerungen hinaus sind bei dem Dichtsitz-Stößelführungs-Bauelement 54 des Ventils 10 gemäß Fig. 2 in Längsrichtung oberhalb der Kegelstumpfoberfläche 26 des Dichtsitzabschnitts des Dichtsitz-Stößelführungs-Bauelements 54 zwei oder mehrere diametral gegenüberliegende radiale Bohrungen 64 ausgebildet. Durch diese radialen Bohrungen 64 kann ein durch den Dichtsitzabschnitt des Dichtsitz-Stößelführungs-Bauelements 54 strömendes Betriebsmedium durch eine nur zweimalige Umlenkung in einem Winkel von jeweils 90° zu dem an der äußeren Mantelfläche der Stößelführung 12 angeordneten Radialfilter 44 strömen. In Fig. 3 ist diese Hauptrichtung der Strömung des Betriebsmediums durch die radialen Bohrungen 64 mit einem Pfeil 66 veranschaulicht.

In Fig. 3 ist ferner die Hauptlinie 68 des magnetischen Flusses in bzw. am Ventil 10 gemäß Fig. 2 dargestellt. Wie zu erkennen ist, geht der magnetische Fluss von der Stößelführung 12 radial auf einen Schenkel des im Querschnitt L-förmigen Einstellrings 56 und von diesem axial in den Anker 46 über. Die Kappe 56 besteht aus magnetischen Fluss leitendem Material und schließt den Magnetkreis zwischen Dichtsitz-Stößelfiihrungs-Bauelement 54 und Anker 46. Eine das Magnetfeld bzw. den magnetischen Fluss erzeugende elektrisch Spule ist nicht dargestellt. Es ist davon auszugehen, dass diese Spule auf das Magnetventil aufgeschoben ist und den Anker 46 sowie die Stößelführung 12 bis zum Bund 14 umschließt.

Bei dem in Fig. 2 und 3 veranschaulichten Ventil 10 ist der Einsatzkörper 30 genau gleich wie der der Fig. 1 gestaltet, obwohl die Radialnuten 42 des Einsatzkörpers 30 nicht mehr notwendig sind und daher weggelassen sein könnten.

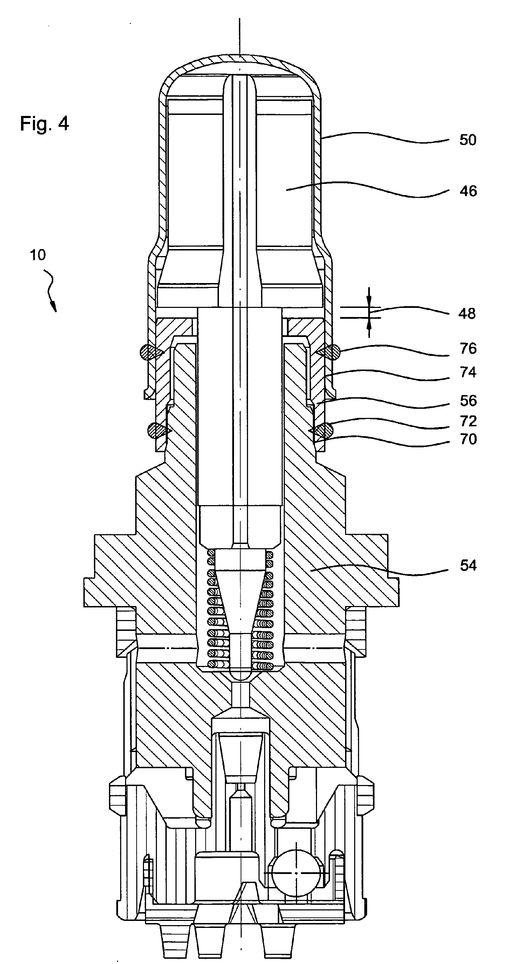

In Fig. 4 ist ein zweites Ausführungsbeispiel eines erfindungsgemäßen elektromagnetischen Ventils 10 dargestellt, das hinsichtlich des Dichtsitz-Stößelführungs-Bauelements 54 und der damit erreichten einteiligen Ausgestaltung von Dichtsitz und Stößelführung, wie das in Fig. 2 und 3 veranschaulichte Dichtsib-Stößelfiihrungs-Bauelement 54 gestaltet ist.

Im Bereich des Einstellrings 56 ist das Ventil 10 gemäß Fig. 4 jedoch abgeändert. Dabei ist der Einstellring 56 in Längsrichtung vergleichsweise lang ausgebildet und zwischen dem bezogen auf Fig. 4 unteren Endbereich dieses langen Einstellrings 56 und dem oberen Endbereich des Dichtsitz-Stößelfiihrungs-Bauelements 54 sind eine Radialpressung 70 und eine umfängliche Laserschweißnaht 72 ausgebildet. Auf die verbleibende Mantelfläche des langen Einstellrings 56 ist die Kappe 50 an einer Radialpressung 74 auf den Einstellring 56 aufgeschoben und dann ebenfalls mit einer Laserschweißnaht 76 festgelegt, wobei die beiden Laserschweißnähte 72 und 76 in einem einzigen Arbeitsgang hergestellt worden sind. Alternativ können die Laserschweißnähte 72 und 76 nacheinander und eventuell sogar in unterschiedlichen Arbeitsstationen hergestellt worden sein.

## Patentansprüche

1. Elektromagnetisches Ventil (10), insbesondere für eine Bremsanlage eines Kraftfahrzeugs mit einem länglichen Stößel (18), der in einer Stößelführung (12) axial verschiebbar geführt ist, und mit einem an dem Stößel (18) ausgebildeten Dichtkörper (20), der gegen einen Dichtsitz (24) abdichten kann, wobei der Dichtsitz (24) und die Stößelführung (12) einteilig ausgebildet sind **dadurch gekennzeichnet, dass** an der Stößelführung (12) eine Einstelleinrichtung (56) vorgesehen ist, mittels der ein Luftspalt (48) in axialer Richtung zwischen Anker (46) und der Stößelführung (12) eingestellt werden kann.

2. Elektromagnetisches Ventil nach Anspruch 1,
**dadurch gekennzeichnet, dass** der Stößel (18) derart in der Stößelführung (12) verschiebbar geführt ist, dass der Dichtkörper (20) zentrisch gegen den Dichtsitz (24) trifft.

3. Elektromagnetisches Ventil nach Anspruch 1,
**dadurch gekennzeichnet, dass** die Einstelleinrichtung als Einstellring (56) gestaltet ist, der insbesondere auf der Stößelführung (12) angeordnet ist.

4. Elektromagnetisches Ventil nach Anspruch 1 oder 3,
**dadurch gekennzeichnet, dass** die Einstelleinrichtung als ein Einstellring (56) gestaltet ist, der mittels einer Radialpressung (58, 70) an der Stößelführung (12) angebracht ist.

5. Elektromagnetisches Ventil nach Anspruch 1,
**dadurch gekennzeichnet, dass** die Einstelleinrichtung als ein Einstellring (56) gestaltet ist, der mittels einer Laserschweißnaht (72), insbesondere an der Mantelfläche einer im Wesentlichen zylindrischen Stößelführung (12) festgelegt ist.

6. Elektromagnetisches Ventil nach Anspruch 5,
**dadurch gekennzeichnet, dass** die Stößelführung (12) bzw. der Einstellring (56) mittels einer Kappe (50) abgedeckt ist, die insbesondere mittels einer Laserschweißnaht (76) an dem Einstellring (56) festgelegt ist.

7. Elektromagnetisches Ventil nach einem der Ansprüche 1 bis 6,
**dadurch gekennzeichnet, dass** in der Stößelführung (12) im Bereich des Dichtsitzes (24) mindestens eine radiale Durchgangsöffnung (64) ausgebildet ist, durch die ein durch den Dichtsitz (24) strömendes Fluid zur Außenseite der Stößelführung (12) abgeführt werden kann.

## Claims

1. Electromagnetic valve (10), in particular for a braking system of a motor vehicle, having an elongate plunger (18) which is guided axially displaceably in a plunger guide (12), and having a sealing body (20) which is formed on the plunger (18) and can produce a sealing action against a sealing seat (24), the sealing seat (24) and the plunger guide (12) being of single-piece configuration, **characterized in that** a setting device (56) is provided on the plunger guide (12), by means of which setting device (56) an air gap (48) can be set in the axial direction between the armature (46) and the plunger guide (12).

2. Electromagnetic valve according to Claim 1, **characterized in that** the plunger (18) is guided displaceably in the plunger guide (12) in such a way that the sealing body (20) makes contact centrally against the sealing seat (24).

3. Electromagnetic valve according to Claim 1, **characterized in that** the setting device is configured as a setting ring (56) which is arranged, in particular, on the plunger guide (12).

4. Electromagnetic valve according to Claim 1 or 3, **characterized in that** the setting device is configured as a setting ring (56) which is attached to the plunger guide (12) by means of a radial press fit (58, 70).

5. Electromagnetic valve according to Claim 1, **characterized in that** the setting device is configured as a setting ring (56) which is fixed by means of a laser welded seam (72), in particular on the circumferential face of a substantially cylindrical plunger guide (12).

6. Electromagnetic valve according to Claim 5, **characterized in that** the plunger guide (12) or the setting ring (56) is covered by means of a cap (50) which is fixed, in particular, by means of a laser welded seam (76) on the setting ring (56).

7. Electromagnetic valve according to one of Claims 1 to 6, **characterized in that** at least one radial through opening (64) is formed in the plunger guide (12) in the region of the sealing seat (24), through which radial through opening (64) a fluid which flows through the sealing seat (24) can be discharged to the outside of the plunger guide (12).

## Revendications

1. Soupape électromagnétique (10), notamment pour un système de freinage de véhicule, comportant un poussoir longitudinal (18) guidé en coulissement axial dans un guide de poussoir (12) et un organe d'étanchéité (20) réalisé sur le poussoir (18) qui réalise l'étanchéité par rapport à un siège d'étanchéité (24),
le siège d'étanchéité (24) et le guidage de poussoir (12) étant en une seule pièce,
**caractérisée par**
une installation de réglage (56) prévue sur le guide de poussoir (12) pour régler l'intervalle d'air (48) dans la direction axiale entre l'induit (46) et le guide de poussoir (12).

2. Soupape électromagnétique selon la revendication 1,
**caractérisée en ce que**
le poussoir (18) est guidé en coulissement dans le guide de poussoir (12) pour que l'organe d'étanchéité (20) rencontre le siège d'étanchéité (24) en position centrée.

3. Soupape électromagnétique selon la revendication 1,
**caractérisée en ce que**
l'installation de réglage est en forme de bague de réglage (56), notamment prévue sur le guide de poussoir (12).

4. Soupape électromagnétique selon la revendication 1 ou 3,
**caractérisée en ce que**
l'installation de réglage est en forme de bague de réglage (56) montée sur le guide de poussoir (12) par une compression radiale (58, 70).

5. Soupape électromagnétique selon la revendication 1,
**caractérisée en ce que**
l'installation de réglage est en forme de bague de réglage (56) fixée notamment par un cordon de soudure au laser (72), notamment à la surface-enveloppe d'un guide de poussoir (12) principalement cylindrique.

6. Soupape électromagnétique selon la revendication 5,
**caractérisée en ce que**
le guide de poussoir (12) ou la bague de réglage (56) est couvert par un capuchon (50) fixé à la bague de réglage (56), notamment par un cordon de soudure au laser (76).

7. Soupape électromagnétique selon l'une des revendications 1 à 6,
**caractérisée en ce qu'**
au niveau du siège d'étanchéité (24), le guide de poussoir (12) comporte au moins un orifice traversant radial (64) pour évacuer vers le côté extérieur du guide de poussoir (12), un fluide traversant le siège d'étanchéité (24).
